# DEMANDE DE BREVET EUROPEEN

(11) **EP 1 717 739 A1**
(43) Date de publication de la demande: **02.11.2006**
(21) Numéro de dépôt: 05109691.5
(22) Date de dépôt: 18.10.2005
(51) Int. Cl.: G06Q 10/00

(54) **Procédé de filtrage sur messagerie instantanée**

(30) Priorité: 26.10.2004 FR 0411395
(71) Demandeur: FRANCE TELECOM, 75015 Paris (FR)
(72) Inventeur: Briand, Olivier, 14000, Caen (FR); Auvray, Vincent, 14000, Caen (FR); Baupin, Nicolas, 14860, Ranville (FR)
(74) Mandataire: Desormiere, Pierre-Louis

(57) **Abrégé**

L'invention concerne un procédé de filtrage de messages dans un serveur de messagerie instantanée (200) comprenant un module principal de messagerie instantanée (210) en liaison avec une base d'information (220) contenant des listes de contact avec des règles de filtrage associées des clients de messagerie instantanée. Le procédé comprend les étapes suivantes:
a) envoi, par un premier client de messagerie instantanée (C_B), d'un message ayant pour destinataire un deuxième client de messagerie instantanée (C_A),
b) interrogation de la liste de contacts (221) du deuxième client de messagerie instantanée pour vérifier si un filtrage des messages du premier client de messagerie instantanée est défini dans ladite liste,
c) en cas de vérification positive, remplacement du destinataire du message par un troisième client de messagerie instantanée (C_C) et renvoi du message vers ce troisième client de messagerie instantanée (C_C), ou
d) en cas de vérification négative, transmission du message vers le deuxième client de messagerie instantanée (C_A).

## Description

### Domaine de l'invention

La présente invention concerne le domaine des messageries instantanées. Elle concerne plus particulièrement le filtrage des messages dans de telles messageries.

### Art antérieur

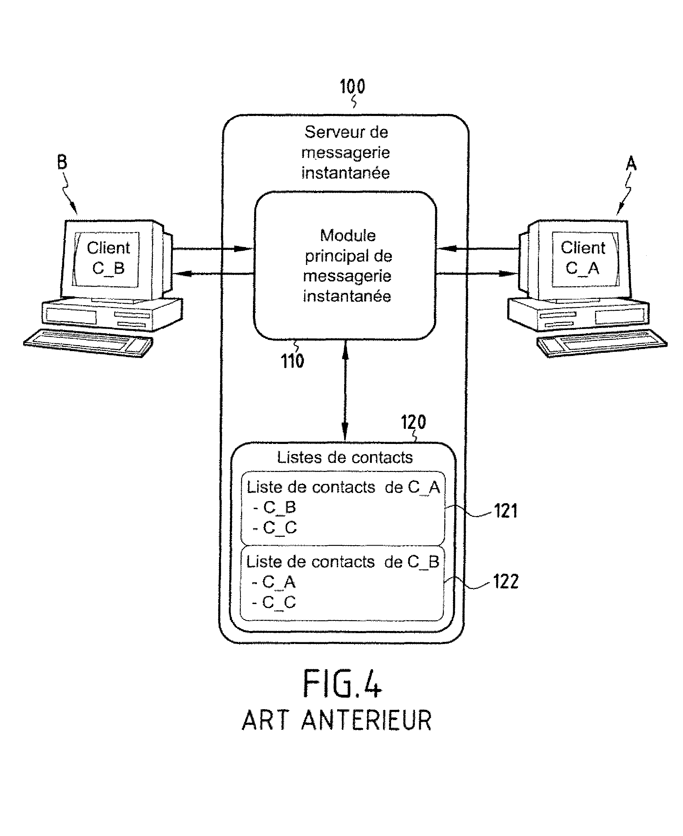

La messagerie instantanée permet à des utilisateurs d'échanger des messages en temps réel. La figure 4 illustre un exemple simplifié d'un système de messagerie instantanée standard qui comprend un serveur de messagerie instantanée 100 auquel sont connectés deux utilisateurs A et B par leur client respectif de messagerie instantanée C_A et C_B. Le serveur 100 comprend un module principal de messagerie instantanée 110 pour la gestion de la présence et l'échange de messages entre clients de messagerie instantanée en fonction de règles de routage des messages instantanés. Ce module gère également l'ensemble des listes de contacts 120 (également appelées « buddy lists ») de chaque client de la messagerie instantanée telles que les listes 121 et 122 correspondant respectivement aux listes de contacts de A et B.

L'état de présence/disponibilité d'un utilisateur est un paramètre dynamique visible pour les autres usagers. Cet état peut varier en général entre un état « présent » et « absent » ou un état « disponible » et « occupé ». Ces états de présence définissent pour l'ensemble de la liste de contacts de l'utilisateur la capacité à dialoguer de ce dernier. C'est l'utilisateur lui-même qui décide de son état de présence.

Sur la figure 4, lorsque l'utilisateur B cherche à dialoguer avec l'utilisateur A à travers des messages instantanés, B consulte d'abord l'état de présence de A indiqué dans sa liste de contact 121. Si ce dernier a paramétré son état de présence sur « disponible» par exemple, l'utilisateur B sait qu'il peut lui envoyer un message immédiatement et entamer un dialogue avec lui. Si, au contraire, l'état de présence de A indiqué dans la liste de contact de B correspond à « absent » ou « occupé », B sait que A est momentanément indisponible et qu'il ne lui répondra pas dans l'immédiat.

Actuellement, un utilisateur de messagerie instantanée peut être totalement ou partiellement « occupé». Dans le dernier cas, l'utilisateur peut être par exemple « occupé » pour 90 % de sa liste de contacts et « disponible » pour les 10 % restants. Cela correspond à la notion de gestion de disponibilité différenciée qui permet à l'utilisateur de choisir pour une période donnée le ou les contacts de sa liste avec lesquels il souhaite dialoguer.

Cependant, si cette fonctionnalité s'avère utile pour indiquer aux contacts temporairement « indésirables » que l'utilisateur est « occupé », elle ne peut empêcher ces derniers d'envoyer quand même des messages à l'utilisateur. Cette situation peut se produire par exemple lorsqu'un contact ne s'est pas aperçu que l'utilisateur était momentanément « occupé » pour lui ou tout simplement en cas d'urgence. Ainsi, durant son dialogue avec les contacts sélectionnés, l'utilisateur peut recevoir des messages émanant d'autres personnes de sa liste de contacts sans possibilité de renvoi de ses messages vers une tierce personne. Il devra donc traiter ces messages ultérieurement comme dans le cas d'une messagerie électronique classique (i.e. non instantanée), ce qui va à l'encontre du principe même de la messagerie instantanée selon lequel les messages (questions/réponses) s'échangent en temps réel.

Dans un contexte professionnel où l'utilisation de la messagerie instantanée se développe de plus en plus, que ce soit à l'intérieur de l'entreprise ou avec des personnes externes (ex. clients, fournisseurs), l'impossibilité de faire traiter en temps réel par une tierce personne, par exemple un collaborateur ou une secrétaire, une partie des messages reçus devient un inconvénient Important. En effet, sur le plan relationnel dans un tel contexte, il apparaît difficile de donner à des personnes son adresse de messagerie instantanée et de laisser les messages envoyés par ces dernières sans réponse immédiate. La messagerie instantanée est perçue comme un moyen d'être joignable en temps réel comme le téléphone.

Par conséquent, il existe une demande croissante pour des solutions de filtrage et de renvoi des messages à l'instar du « filtrage secrétaire » bien connu en téléphonie.

### Objet et description succincte de l'invention

La présente invention vise à remédier aux inconvénients précités et proposer une solution technique qui permet dans une messagerie instantanée de filtrer tout ou partie des messages reçus et de les renvoyer vers une tierce personne.

Ces buts sont atteints grâce à un procédé de filtrage de messages dans un serveur de messagerie instantanée comprenant un module principal de messagerie instantanée en liaison avec une base d'information contenant des listes de contacts avec des règles de filtrage associées des clients de messagerie instantanée, le procédé comprenant les étapes suivantes:
a) envoi, par un premier client de messagerie instantanée, d'un message ayant pour destinataire un deuxième client de messagerie instantanée,
b) interrogation de la liste de contacts du deuxième client de messagerie instantanée pour vérifier si un filtrage des messages du premier client de messagerie instantanée est défini dans ladite liste,
c) en cas de vérification positive, remplacement du destinataire du message par un troisième client de messagerie et renvoi du message vers le troisième client de messagerie instantanée, ou
d) en cas de vérification négative, transmission du message vers le deuxième client de messagerie instantanée.

Ainsi, le procédé de filtrage de la présente invention permet à un utilisateur de messagerie instantanée d'activer des filtres pour des clients de messagerie instantanée de sa liste de contacts dont il ne souhaite pas recevoir des messages. Les messages filtrés, c'est-à-dire non reçus par l'utilisateur ayant activé les filtres, sont en outre redirigés (i.e. reroutés) vers une tierce personne choisie par l'utilisateur, ce qui permet de ne pas laisser les messages filtrés sans réponse.

Plus particulièrement, le serveur de messagerie instantanée comprend en outre un module de filtrage qui, dans l'étape b), envoie une requête au module principal de messagerie pour connaître les règles de filtrage présentes dans la liste de contacts du deuxième client de messagerie instantanée. Les règles de filtrage sont définies pour chaque client de messagerie instantanée dont on souhaite filtrer les messages et comprennent au moins une indication qu'un filtre est activé pour ce client ainsi que le client de messagerie instantanée vers lequel les messages instantanés doivent être renvoyés.

Ainsi, dans l'étape c), le troisième client de messagerie instantanée remplaçant le destinataire du message est déterminé en fonction des règles de filtrage définies dans la liste de contacts du deuxième client de messagerie instantanée.

Dans l'étape c), le module de filtrage peut modifier en outre le contenu du message de manière à informer le troisième client de messagerie instantanée du changement de destinataire.

Les étapes a) à d) décrites ci-dessus peuvent être répétées de façon récursive en fonction des règles de filtrage du troisième client de messagerie instantanée. Plus précisément, après un premier déroulement des étapes a) à c) comme décrit précédemment, le deuxième client de messagerie instantanée à partir duquel le message du premier client de messagerie instantanée a été filtré est considéré, pour la nouvelle série d'étapes a) à d), comme "le premier client de messagerie instantanée" tandis que le troisième client de messagerie instantanée est quant à lui considéré comme "le deuxième client de messagerie" nouveau destinataire du message filtré.

Par conséquent, après filtrage du message vers le troisième client de messagerie instantanée, on revient à l'étape a) avec : "premier client de messagerie instantanée" = deuxième client de messagerie instantanée (i.e. nouvel expéditeur après filtrage), "deuxième client de messagerie instantanée" = troisième client de messagerie instantanée (i.e. nouveau destinataire après filtrage) et : "message" = message filtré. Ainsi, lors d'une nouvelle étape b), on interroge la liste de contact du troisième client de messagerie instantanée pour vérifier si un filtrage des messages du deuxième client de messagerie instantanée est défini dans sa liste. En cas de vérification positive, on exécute une nouvelle étape c) de remplacement du destinataire du message par un autre client de messagerie instantanée défini dans les règles de filtrage de la liste de contacts du troisième client de messagerie instantanée. Ces étapes sont répétées jusqu'à ce qu'on ne trouve plus de règles de filtrage pour les messages en provenance du "premier client de messagerie instantanée" dans la liste de contact du client de messagerie indiqué comme destinataire du message qui correspond alors au déroulement de l'étape d).

Dans l'étape c), le module de filtrage envoie le message au module principal de messagerie instantanée qui transmet ledit message au destinataire finalement indiqué dans celui-ci.

La modification du contenu du message n'est effectuée qu'une fois lors du premier filtrage. En effet, le contenu est modifié pour indiquer au nouveau destinataire que le message ne lui est pas directement adressé et cette information vaut pour tous les autres destinataires suivants si des filtrages supplémentaires sont appliqués comme décrit précédemment.

La présente invention a également pour objet un serveur de messagerie instantanée comprenant un module principal de messagerie instantanée pour gérer l'échange des messages instantanés entre les clients de messagerie instantanée, ledit module principal étant en liaison avec une base d'information contenant les listes de contacts et les règles de filtrage associées des clients de messagerie instantanée, le serveur comprenant en outre conformément à l'invention un module de filtrage pour filtrer des messages envoyés par un premier client de messagerie instantanée à destination d'un second client de messagerie instantanée et pour renvoyer lesdits messages vers un troisième client de messagerie instantanée.

La solution technique proposée par l'invention pour réaliser un filtrage des messages dans un serveur de messagerie instantanée ne nécessite aucune modification du module principal de messagerie. Cette solution peut être, par conséquent, facilement intégrée dans des serveurs de messagerie instantanée déjà en place.

Le troisième client de messagerie instantanée, vers lequel les messages envoyés par le premier client de messagerie instantanée sont renvoyés, est déterminé en fonction des règles de filtrage définies dans la base contenant les listes de contacts et les règles de filtrage associées du deuxième client de messagerie instantanée.

Selon un aspect de l'invention, le module de filtrage comprend en outre des moyens pour modifier le contenu des messages renvoyés de manière à informer le troisième client de messagerie instantanée du changement de destinataire. Comme expliqué précédemment, la modification du contenu du message n'est effectuée qu'une fois lors du premier filtrage.

Le troisième client de messagerie instantanée peut lui aussi avoir appliqué un filtre pour les messages envoyés par le deuxième client de messagerie instantanée qui a été substitué au premier en tant qu'expéditeur lors du filtrage. D'une manière générale, pour chaque destinataire indiqué dans le message instantané (i.e. destinataire initial et destinataire(s) de renvoi), le module de filtrage interroge le module principal de messagerie instantanée jusqu'à ce que ce dernier ne trouve plus de filtre appliqué vis-à-vis du client de messagerie instantanée qui a filtré le message en dernier.

L'invention a encore pour objet un système de messagerie instantanée comprenant au moins trois clients de messagerie instantanée en liaison avec au moins un serveur de messagerie instantanée tel que décrit précédemment.

Afin d'activer des filtres et de paramétrer des règles de filtrage associées pour des clients de messagerie instantanée, les clients de messagerie instantanée comprennent des moyens d'interface pour configurer au moins un filtrage dans leur liste de contact respective.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique globale d'un mode de réalisation du système de messagerie instantanée selon l'invention,
- la figure 2 montre un exemple de paramétrage de filtrage à partir d'un client de messagerie instantanée conformément à un procédé de l'invention,
- la figure 3 montre un exemple d'un message instantané filtré et renvoyé vers une tierce personne conformément à l'invention,
- la figure 4 est une vue schématique d'un système de messagerie instantanée selon l'art antérieur.

### Description détaillée des modes de réalisation de l'invention

La présente invention s'applique aux systèmes de messagerie instantanée. L'invention propose d'intégrer des fonctionnalités essentiellement sous forme logicielle dans les serveurs de messagerie instantanée habituellement utilisés pour réaliser des échanges de messages instantanés entre des utilisateurs. Les fonctionnalités proposées sont compatibles avec les normes et protocoles actuellement utilisés par les services de messageries instantanées, ce qui permet d'intégrer ces nouvelles fonctionnalités aussi bien dans des nouveaux serveurs que dans des serveurs de messagerie instantanée déjà en place.

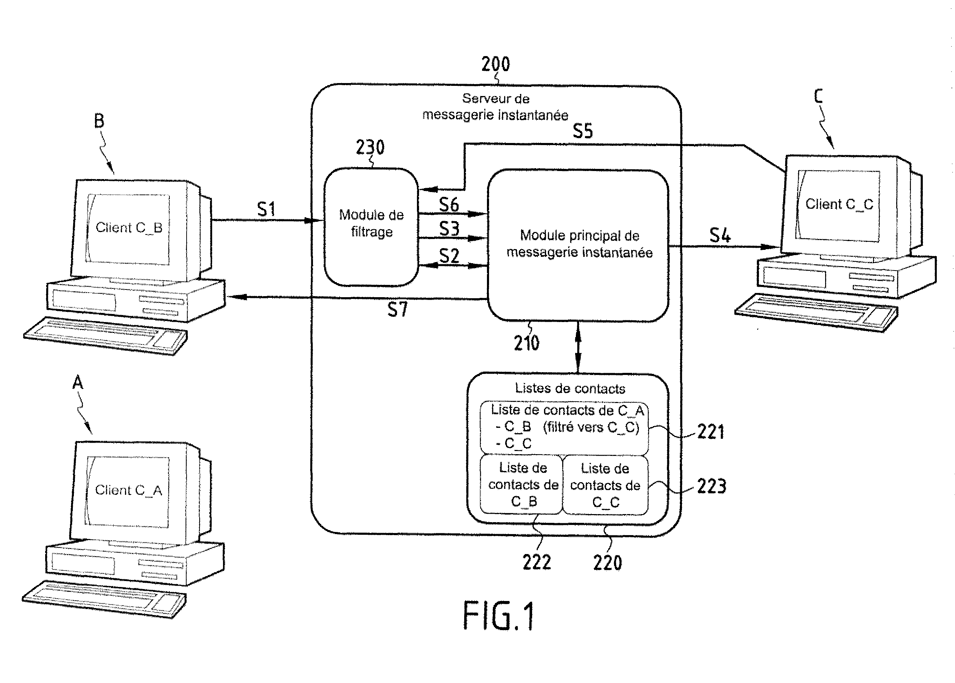

La figure 1 est un schéma fonctionnel général d'un système selon l'invention montrant les différentes parties intervenant dans le procédé de l'invention. Les parties qui interviennent principalement lors d'une opération de filtrage sont au moins trois utilisateurs A, B et C qui possèdent chacun un terminal comprenant un client de messagerie instantanée, respectivement C_A, C_B et C_C, ainsi qu'un serveur de messagerie instantanée 200. De façon connue, le client de messagerie instantanée (ou agent utilisateur) est un logiciel qui permet à un utilisateur d'accéder, par un identifiant propre, à un service de messagerie instantanée via un serveur. Le client de messagerie instantanée permet notamment de composer et de recevoir des messages. Il permet aussi à l'utilisateur d'accéder au serveur de messagerie instantanée pour gérer sa liste de contacts associée.

Pour ne pas alourdir inutilement la description de l'invention, celle-ci est décrite en relation avec un système de messagerie instantanée dans lequel les utilisateurs disposent, en tant que terminal d'envoi et de réception des messages, d'un terminal fixe, du type ordinateur personnel connecté à un réseau informatique. Cependant, la présente invention s'applique d'une manière générale à tous les terminaux qui comprennent des moyens d'envoi et de réception de messages instantanés via un réseau de communication (ex. téléphone mobile ou un assistant numérique personnel).

Le réseau de communication (non représenté) à travers lequel les terminaux des utilisateurs sont connectés au serveur de messagerie instantanée peut être un réseau « ouvert » comme le réseau Internet, un réseau « fermé » tel qu'un réseau d'entreprise de type Intranet, ou encore un réseau partiellement ouvert utilisant à la fois un réseau fermé et un réseau ouvert.

Le serveur de messagerie instantanée 200 permet l'échange de messages instantanés entre deux utilisateurs qui sont vus par le serveur comme unique grâce à leur identifiant. Le serveur de messagerie instantanée 200 comprend un module principal de messagerie instantanée 210, un module de listes de contacts et de règles de filtrage associées 220 et un module de filtrage 230.

Le module principal de messagerie instantanée 210, qui est un élément logiciel d'un serveur de messagerie instantanée bien connu en soi, est destiné à réaliser la gestion de présence et l'échange de messages entre les clients de messagerie instantanée en fonction de règles de routage de messages instantanés (agent de transfert). Il gère également les listes de contacts.

Le module 220 est une base d'informations qui fait partie intégrante du serveur de messagerie instantanée et qui contient toutes les listes de contacts de chaque client de messagerie, dans l'exemple considéré ici les listes de contacts des clients C_A 221, C_B 222 et C_C 223. Conformément à la présente invention, les listes de contact contiennent des informations supplémentaires qui correspondent à des règles de filtrage des messages comme expliqué plus loin en détail.

Le module de filtrage des messages 230 est un élément propre à la présente invention. Ce module interroge les informations de filtrage (i.e. règles de filtrage associées) présentes dans les listes de contacts via le module principal 210. Plus précisément, le module de filtrage 230 permet de réaliser le filtrage des messages instantanés selon le procédé de l'invention. A cet effet, il échange des informations avec le module principal de messagerie instantanée 210. Tous les messages en provenance d'un client de messagerie instantanée transitent d'abord par le module de filtrage 230 qui les traitent avant de les envoyer au module principal 210.

Par souci de simplification, le système de la figure 1 représente la configuration minimum dans laquelle le procédé de filtrage selon l'invention peut être mis en oeuvre, à savoir trois utilisateurs A, B et C, avec B comme utilisateur cherchant à envoyer un message à l'utilisateur A qui a quant à lui décidé de renvoyer tous les message en provenance de B vers une tierce personne C. Toutefois, au vu de la description qui suit, l'homme du métier envisagera sans difficulté la mise en oeuvre d'un tel système à plus grande échelle, c'est-à-dire avec un nombre d'utilisateurs plus important.

Le module de filtrage 230 peut être développé dans un langage tel que le C++ ou Java. Ainsi, il peut être intégré dans l'architecture d'un serveur de messagerie instantanée (ex. Jabber) et utilise dans ce cas le protocole standarisé « XMPP » (« extensible Messaging and Présence Protocol » ; Protocole de messagerie instantanée basé sur XML). Dans le cas où le module de filtrage selon l'invention est intégré dans un serveur de messagerie instantanée déjà existant ou non, ce dernier doit utiliser un protocole compatible avec celui employé par le module principal de ce serveur de messagerie instantanée.

Le module de filtrage 230 est placé en amont du module principal de messagerie instantanée 210 pour les clients de messagerie instantanée C_A, C_B et C_C. Il examine le destinataire de tous les messages arrivant sur le serveur. Pour chaque message en provenance d'un client de messagerie instantanée, le module de filtrage interroge le module principal 210 pour connaître les règles de filtrage présentes dans la liste de contacts du destinataire. Si le destinataire a paramétré une option de filtrage dans sa liste de contacts vis-à-vis de l'émetteur du message (ex. l'utilisateur A active un filtre pour les messages en provenance de l'utilisateur B avec renvoi vers l'utilisateur C), le message est modifié. La modification du message est effectuée à la fois dans l'entête et le corps du message. Dans l'entête, le destinataire du message est remplacé par le contact défini dans sa liste de contacts vers lequel il a décidé de renvoyer le message. En outre, le corps du message est modifié afin de préciser dans le texte du message que le destinataire a changé. De façon optionnelle, le destinataire initial A du message peut être notifié afin d'être informé que l'utilisateur B a essayé de le joindre.

Dans tous les cas, le message est envoyé au module principal de messagerie instantanée 210 qui le transmet au destinataire indiqué dans le message qui peut être soit le destinataire d'origine, soit un destinataire modifié en cas de filtrage.

Le module de filtrage 230 est en liaison avec, d'une part, les clients de messagerie instantanée C_A, C_B et C_C émetteurs de messages instantanés et, d'autre part, le module principal de messagerie instantanée 210.

Le paramétrage d'un filtre dans une liste de contacts est réalisé par l'utilisateur directement sur le serveur de messagerie instantanée à partir de son client de messagerie instantanée. Le client de messagerie instantanée de l'utilisateur adresse une requête au serveur de messagerie instantanée pour définir un filtre dans sa liste de contacts. Cette requête transite par le module de filtrage qui l'adresse au module principal de messagerie instantanée. Le module principal effectue les modifications requises dans la liste de contacts. Ainsi, conformément à l'invention, l'établissement et le paramétrage d'un filtre ne nécessite pas de modification du module principal de messagerie instantanée. En effet, le filtrage des messages instantanés dans la présente invention est réalisé par un module de filtrage spécifique à partir d'une liste de contact avancée qui contient des indications de filtrage (i.e. des règles de filtrage associées) pour certains contacts ainsi que le nouveau destinataire pour chaque message filtré.

La liste de contacts avec règles de filtrage associées de l'utilisateur A de la figure 1 peut être par exemple de la forme suivante :
- Utilisateur N (disponible)
- Utilisateur B (filtré vers utilisateur C)
- Utilisateur C (disponible)

La requête correspondante pour définir une telle liste de contact avec règles de filtrage associées suivant le protocole XMPP s'écrit :

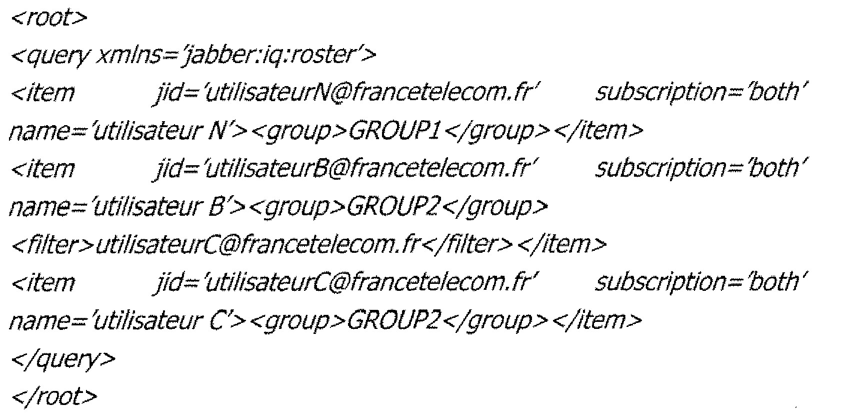

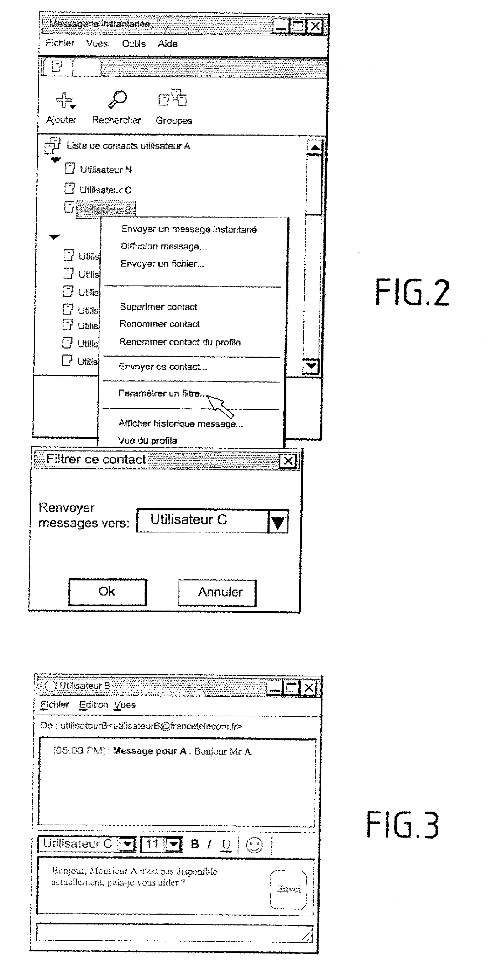

Un exemple de paramétrage de filtre est illustré sur la figure 2 qui représente un type d'interface qui peut être utilisée par l'utilisateur A de la figure 1 pour définir un filtrage des messages émanant de l'utilisateur B avec renvoi de ceux-ci vers l'utilisateur C qui peut être par exemple la secrétaire de A. Sur la figure 2, l'utilisateur A décide de filtrer les messages en provenance de l'utilisateur B en sélectionnant l'option « Paramétrer un filtre » à partir du contact « utilisateur B » affiché dans sa liste de contacts. Une fois l'option sélectionnée, une fenêtre « Renvoyer ce contact vers : » s'affiche pour permettre à l'utilisateur A de définir vers quel autre utilisateur les messages de l'utilisateur B doivent être renvoyés, à savoir dans l'exemple ici considéré l'utilisateur C. A partir de cet instant, tous les messages instantanés émanant de l'utilisateur B à destination de l'utilisateur A seront renvoyés vers l'utilisateur C.

On décrit maintenant un mode de mise en oeuvre du procédé selon l'invention dans le système de la figure 1 sur laquelle les différentes étapes intervenant lors d'une opération de filtrage d'un message instantané sont représentées par des flèches S1 à S7. Le procédé selon l'invention comprend bien entendu une étape préalable de paramétrage d'un ou plusieurs filtres dans une liste de contacts et de règles de filtrages associées comme expliqué précédemment.

La mise en oeuvre qui va être décrite se déroule selon les hypothèses suivantes :
- l'utilisateur B du client de messagerie instantanée C_B fait partie de la liste de contacts du client de messagerie instantanée C_A et réciproquement,
- l'utilisateur C du client de messagerie instantanée C_C fait partie de la liste de contacts du client de messagerie instantanée C_A et réciproquement,
- l'utilisateur A du client de messagerie instantanée C_A a décidé de renvoyer tout message du client de messagerie instantanée C_B vers le client de messagerie instantanée C_C.

L'exemple de mise en oeuvre est décrit avec le protocole XMPP.

Dans une première étape S1, l'utilisateur B souhaite dialoguer avec l'utilisateur A en envoyant à partir de son client de messagerie instantanée C_B un message instantané à destination du client de messagerie instantanée C_A. Le message instantané arrive au module de filtrage 230 et est du type :

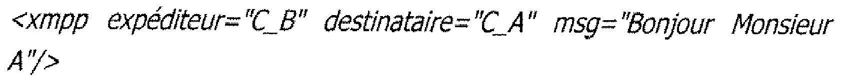

Le module de filtrage 230 interroge le module principal de messagerie instantanée 210 pour déterminer si un filtre existe dans la liste de contacts de C_A 221 qui est le destinataire du message. Le module principal 210 détecte dans la liste de contacts 221 que tout message émanant de C_B doit être filtré et renvoyé vers le client de messagerie instantanée C_C (étape S2).

Le module principal 210 communique cette information au module de filtrage 230 qui modifie le message attribut *msg* et change le *destinataire* C_A par C_C, ce qui donne :

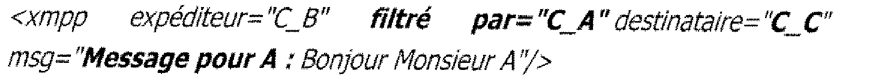

Le message ainsi modifié est alors envoyé au module principal 210 (étape S3).

Le client de messagerie instantanée C_C peut avoir également appliqué un filtre dans sa liste de contacts 223. Le module de filtrage 230 réinterroge le module principal 210 afin de déterminer si C_C a appliqué un filtre vis-à-vis du dernier expéditeur mentionné dans le message, à savoir ici C_A. En effet, le module de filtrage 230 regarde l'information *« filtré par»* en premier (i.e. avant l'expéditeur initial) de manière à ce que le filtre soit appliqué au client qui a filtré le message en dernier et non à l'expéditeur comme la première fois. Si C_C a effectivement appliqué un filtre pour filtrer les messages de C_A vers un autre client de messagerie instantanée, par exemple C_D, le message devient :

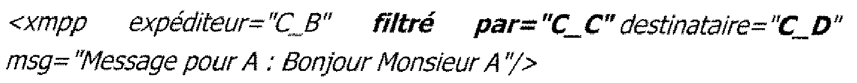

Le contenu du message, c'est-à-dire le champ *msg* n'est modifié qu'au premier filtrage et reste le même lors des filtrages suivants.

Cette procédure est répétée de façon récurrente jusqu'à ce que le module principal 210 ne trouve plus de filtre vis-à-vis du client de messagerie instantanée qui a filtré le message en dernier dans la liste de contacts du destinataire qui devient alors le destinataire final du message.

Par souci de simplification, on considère dans l'exemple ici décrit que C_C n'a pas appliqué de filtre. Ainsi, dans l'étape suivante S4, le module principal de messagerie instantanée 210 transmet ce message au client de messagerie instantanée C_C qui le reçoit avec le texte modifié comme illustré sur la figure 3.

Une fois le message reçu par l'utilisateur C, la conversation se met en place. Comme illustré sur la figure 3, le client de messagerie instantanée C_C rédige une réponse qui est envoyée vers le serveur de messagerie instantanée 200. Cette réponse est contenue dans un message du type : 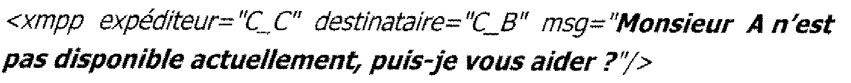 Le message est reçu par le module de filtrage 230 qui le traite le cas échéant en interrogeant des éventuelles règles de filtrage associées au client de messagerie C_B (étape S5).

Le message est alors transmis au module principal 210 (étape (S6) qui le transmet au client de messagerie instantanée C_B (étape S7).

L'échange de messages instantanés entre les clients de messagerie instantanée C_B et C_C se poursuit alors normalement comme une messagerie instantanée classique, c'est-à-dire sans autre traitement de la part du module de filtrage.

La présente invention offre donc à tout utilisateur de messagerie instantanée la possibilité d'activer et de paramétrer des filtres à partir de sa liste de contacts afin de désigner les clients de messagerie dont il ne souhaite pas recevoir des messages et de rediriger ces derniers vers une tierce personne de son choix afin qu'ils ne restent pas sans réponse. L'invention permet de mettre à disposition des utilisateurs de messagerie instantanée les mêmes fonctionnalités de filtrage/renvoi que celles qui existent en téléphonie.

## Revendications

1. Procédé de filtrage de messages dans un serveur de messagerie instantanée (200) comprenant un module principal de messagerie instantanée (210) en liaison avec une base d'information (220) contenant des listes de contact avec des règles de filtrage associées des clients de messagerie instantanée, ledit procédé comprenant les étapes suivantes:
a) envoi, par un premier client de messagerie instantanée (C_B), d'un message ayant pour destinataire un deuxième client de messagerie instantanée (C_A),
b) interrogation de la liste de contacts (221) du deuxième client de messagerie instantanée pour vérifier si un filtrage des messages du premier client de messagerie instantanée est défini dans ladite liste,
c) en cas de vérification positive, remplacement du destinataire du message par un troisième client de messagerie instantanée (C_C) et renvoi du message vers ce troisième client de messagerie instantanée (C_C), ou
d) en cas de vérification négative, transmission du message vers le deuxième client de messagerie instantanée (C_A).

2. Procédé selon la revendication 1, **caractérisé en ce que** le serveur de messagerie instantanée comprend en outre un module de filtrage (230) qui, dans l'étape b), envoie une requête au module principal de messagerie instantanée (210) pour connaître les règles de filtrage présentes dans la liste de contacts (221) du deuxième client de messagerie instantanée (C_A).

3. Procédé selon la revendication 2, **caractérisé en ce que**, dans l'étape c), le troisième client de messagerie instantanée (C_C) remplaçant le destinataire du message est déterminé en fonction des règles de filtrage définies dans la liste de contacts (221) du deuxième client de messagerie instantanée (C_A).

4. Procédé selon la revendication 2 ou 3, **caractérisé en ce que** dans l'étape c), le module de filtrage (230) modifie le contenu du message de manière à informer le troisième client de messagerie instantanée (C_C) du changement de destinataire.

5. Procédé selon l'une quelconque des revendications 1 à 4, **caractérisé en ce qu'**il comprend en outre une étape d'interrogation de la liste de contacts (223) du troisième client de messagerie instantanée (C_C) pour vérifier si un filtrage des messages du deuxième client de messagerie instantanée est défini dans ladite liste, et, en cas de vérification positive, une étape de remplacement du destinataire du message par un autre client de messagerie instantanée et renvoi du message vers cet autre client de messagerie instantanée, ces deux étapes étant répétées jusqu'à ce qu'on ne trouve plus de filtrage dans la liste de contact du destinataire du message vis-à-vis du client de messagerie instantanée qui a filtré le message en dernier.

6. Procédé selon l'une quelconque des revendications 2 à 5, **caractérisé en ce que**, dans l'étape c), le module de filtrage (230) envoie le message au module principal de messagerie instantanée qui transmet ledit message au destinataire indiqué dans celui-ci.

7. Serveur de messagerie instantanée (200) comprenant un module principal de messagerie instantanée (210) pour gérer l'échange des messages instantanés entre des clients de messagerie instantanée (C_A, C_B, C_C), **caractérisé en ce que** ledit module principal est en liaison avec une base d'information (220) contenant des listes de contacts et des règles de filtrage associées (221, 222, 223) des clients de messagerie instantanée, et **en ce qu'**il comprend en outre un module de filtrage (230) pour filtrer des messages envoyés par un premier client de messagerie instantanée (C_B) à destination d'un second client de messagerie instantanée (C_A) et pour renvoyer lesdits messages vers un troisième client de messagerie instantanée (C_C).

8. Serveur selon la revendication 7, **caractérisé en ce que** le troisième client de messagerie instantanée (C_C), vers lequel les messages envoyés par le premier client de messagerie instantanée (C_B) sont renvoyés, est déterminé en fonction des règles de filtrage définies dans la liste de contacts (221) du deuxième client de messagerie instantanée (C_A).

9. Serveur selon la revendication 7 ou 8, **caractérisé en ce que** le module de filtrage (230) comprend en outre des moyens pour modifier le contenu des messages renvoyés de manière à informer le troisième client de messagerie instantanée (C_C) du changement de destinataire.

10. Système de messagerie instantanée comprenant au moins trois clients de messagerie instantanée (C_A, C_B, C_C) en liaison avec au moins un serveur de messagerie instantanée selon l'une quelconque des revendications 6 à 9.

11. Système selon la revendication 9, **caractérisé en ce que** les clients de messagerie instantanée (C_A, C_B, C_C) comprennent des moyens d'interface pour configurer au moins un filtrage dans leur liste de contacts respective.

12. Module de filtrage (230) destiné à être mis en oeuvre dans un serveur de messagerie instantanée (200) comprenant un module principal de messagerie instantanée (210) pour gérer l'échange des messages instantanés entre des clients de messagerie instantanée (C_A, C_B, C_C), **caractérisé en ce que** ledit module de filtrage comprend des moyens pour filtrer des messages envoyés par un premier client de messagerie instantanée (C_B) à destination d'un second client de messagerie instantanée (C_A) et pour renvoyer lesdits messages vers un troisième client de messagerie instantanée (C_C).

13. Module selon la revendication 12, **caractérisé en ce qu'**il comprend en outre des moyens pour modifier le contenu des messages renvoyés de manière à informer le troisième client de messagerie instantanée (C_C) du changement de destinataire.

14. Programme d'ordinateur destiné à être mis en oeuvre sur un serveur de messagerie instantanée (200) gérant rechange des messages instantanés entre des clients de messagerie instantanée (C_A, C_B, C_C), **caractérisé en ce qu'**il comprend des instructions pour filtrer des messages envoyés par un premier client de messagerie instantanée (C_B) à destination d'un second client de messagerie instantanée (C_A) et pour renvoyer lesdits messages vers un troisième client de messagerie instantanée (C_C).

15. Programme selon la revendication 14, **caractérisé en ce qu'**il comprend en outre des instructions pour modifier le contenu des messages renvoyés de manière à informer le troisième client de messagerie instantanée (C_C) du changement de destinataire.
